# EUROPÄISCHE PATENTANMELDUNG

(11) **EP 2 278 074 A2**
(43) Veröffentlichungstag der Anmeldung: **26.01.2011**
(21) Anmeldenummer: 10006126.6
(22) Anmeldetag: 14.06.2010
(51) Int. Cl.: E01H 1/08

(54) **Selbstfahrende aufnehmende Kehrmaschine**

(30) Priorität: 19.06.2009 DE 102009029956
(71) Anmelder: Aebi Schmidt Deutschland GmbH, 79837 St. Blasien (DE)
(72) Erfinder: Binkert, Roger, 79774 Albbruck-Birndorf (DE)
(74) Vertreter: Grättinger Möhring von Poschinger Patentanwälte Partnerschaft

(57) **Zusammenfassung**

Bei einer selbstfahrenden aufnehmenden Kehrmaschine (1) mit einem Trägerfahrzeug (2), einer Kehreinheit (4) und einer Kehrgut-Aufnahmeeinheit (5) umfasst letztere einen Kehrgut-Ansaugtrakt (7) mit einem Saugmund (8) und einem Saugkanal (9), einen Kehrgut-Sammelbehälter (6) und ein Sauggebläse (10). Die Kehrgut-Aufnahmeeinheit weist ein durchströmtes, der Abscheidung von leichtem Grobgut dienendes Laubsieb (14) auf. Dabei ist dem Laubsieb (14) zuströmseitig ein relativ zu diesem bewegter Saugkopf (19) zugeordnet.

## Beschreibung

Die vorliegende Erfindung betrifft eine selbstfahrende aufnehmende Kehrmaschine mit einem Trägerfahrzeug, einer Kehreinheit und einer Kehrgut-Aufnahmeeinheit gemäß dem Oberbegriff des Anspruchs 1.

Derartige Kehrmaschinen sind in verschiedenen Ausgestaltungen bekannt. Im Einsatz sind insbesondere gattungsgemäße Kehrmaschinen in Form von sogenannten Kompaktkehrmaschinen und Aufbaukehrmaschinen. Offenbart sind gattungsgemäße Kehrmaschinen beispielsweise in der DE 29901362 U1 und der US 4554701, deren Offenbarungsgehalt durch Bezugnahme zum Inhalt der vorliegenden Anmeldung gemacht wird.

Bei spezifischen Einsatzbedingungen, insbesondere wenn das aufzunehmende Kehrgut einen erheblichen Anteil an leichtem Grobgut wie insbesondere trockenem Laub, Papier, Kunststofffolien oder dergleichen umfasst, kann bei bekannten gattungsgemäßen Kehrmaschinen die Reinigungsleistung nicht unerheblich nachlassen, weil die betreffenden Materialien das sog. "Laubsieb" mehr oder weniger zusetzen und auf diese Weise den Kehrluftstrom durch die Kehrgut-Aufnahmeeinheit hindurch behindern können. Stellt sich durch eine entsprechende Beladung des Laubsiebes eine erhebliche Einbuße der Reinigungsleistung ein, so wird das Laubsieb gereinigt. Dies erfolgt in der Praxis typischerweise von Hand bzw. mittels eines Besens, den der Fahrer durch eine seitlich am Kehrgut-Sammelbehälter angebrachte Reinigungstüre in das Behälterinnere einführt. Es ist auch bereits vorgeschlagen worden (vgl. DE 8613829 U1), zur Reinigung des Laubsiebes an dessen Zuströmseite einen hin und her beweglich angeordneten, mittels eines Handgriffs betätigbaren Siebkratzer vorzusehen. Auch ist bereits vorgeschlagen worden, stromaufwärts des Laubsiebes einen Kettenvorhang vorzusehen, der einer Anlagerung der problematischen Schmutzteile an dem Laubsieb entgegenwirken soll (vgl. DE 9302250 U1). Die DE 2030150 A1 schlägt schließlich eine Einrichtung zum selbsttätigen Reinigen des Laubsiebes einer Kehrmaschine vor, wobei der Kehrgut-Sammelbehälter mit einem freibeweglichen Gitter und mit einer Einrichtung zum plötzlichen Ändern der Menge der angesaugten Luft versehen ist.

In der Praxis haben sich die betreffenden Vorschläge nicht durchgesetzt, weil die in sie gesetzten Erwartungen nicht erfüllt wurden. Daher werden die Laubsiebe gattungsgemäßer bekannter Kehrmaschinen typischerweise nach wie vor von Hand gereinigt, wobei, zur Vergrößerung der entsprechenden Reinigungsintervalle, die Oberfläche der Laubsiebe möglichst groß gewählt wird, insbesondere durch Treppen- bzw. zickzackartig gefaltete Laubsiebe.

Die vorliegende Erfindung hat sich zur Aufgabe gemacht, eine gattungsgemäße selbstfahrende aufnehmende Kehrmaschine bereitzustellen, bei der bei einem hohen Bedienkomfort für den Fahrer bzw. Bediener dem Nachlassen der Reinigungsleistung durch die vorstehend aufgezeigten Zusammenhänge wirksam entgegengewirkt werden kann.
Auf überraschend einfache Weise wird diese Aufgabe erfindungsgemäß dadurch gelöst, dass bei einer selbstfahrenden aufnehmenden Kehrmaschine der gattungsgemäßen Art dem Laubsieb zuströmseitig ein relativ zu diesem bewegter Saugkopf zugeordnet ist. Mittels des betreffenden Saugkopfes kann das zuströmseitig an dem Laubsieb anhaftende, von diesem aufgefangene Kehrgut, nachfolgend im Hinblick auf sein bezogen auf seine Oberfläche geringes Gewicht als "Leichtgut" bezeichnet, kontinuierlich oder gegebenenfalls bedarfsabhängig intermittierend entfernt und das Laubsieb auf diese Weise "regeneriert" werden, so dass die Kehrmaschine jederzeit die volle Reinigungsleistung entfaltet. Ein mühsames Reinigen des Laubsiebes von Hand, das, weil es nicht sehr angenehm ist, bei bekannten gattungsgemäßen Kehrmaschinen - mit den weiter oben beschriebenen Folgen - häufig übermäßig hinausgezögert wird oder gar gänzlich unterbleibt, ist in Anwendung der vorliegenden Erfindung entbehrlich. In weiterer Konsequenz gestattet die vorliegende Erfindung, weil eine kontinuierliche bzw. bedarfsabhängig intermittierende, automatisierte Reinigung des Laubsiebes möglich ist, das Laubsieb kleiner auszuführen, als dies bei herkömmlichen gattungsgemäßen Kehrmaschinen der Fall ist. Dies gibt einen größeren Spielraum bei der konstruktiven Gestaltung der Kehrgut-Aufnahmeeinheit und gestattet, diese optimal an die Abscheidung auch anderer Kehrgutfraktionen anzupassen. Namentlich der besagte kontinuierliche Reinigungsbetrieb mittels eines ständig - typischerweise relativ langsam, z.B. zwischen 1- und 5-mal pro Minute - über das Laubsieb bewegten Saugkopfes ist besonders günstig, weil er einem Aufbau einer Leichtgutverschmutzung bzw. -Verstopfung des Laubsiebes ständig entgegenwirkt. Bei dieser Betriebsweise ist somit ein Entfernen größeren Mengen von Leichtgut von dem Laubsieb nicht erforderlich. Dies ist auch deshalb besonders vorteilhaft, weil hierdurch ein vergleichsweise niedriger Unterdruck an dem Saugkopf ausreicht, um die angestrebte Reinigungswirkung zu erzielen.

Was die Art der Bewegung des Saugkopfes relativ zu dem (feststehenden) Laubsieb betrifft, so gibt es hierfür in Abhängigkeit von der konstruktiven Ausführung der Kehrgut-Aufnahmeeinheit im Übrigen verschiedene besonders günstige Varianten. Insbesondere erweist sich für Kehrmaschinen mit einem typischen Aufbau als besonders vorteilhaft, wenn der Saugkopf rotierend oder aber oszillierend bewegt angetrieben ist, wobei die oszillierende Bewegung insbesondere in Form einer geradlinigen Bewegung des Saugkopfes entlang mindestens einer sich parallel zum Laubsieb erstreckenden Führung oder aber um eine Achse verschwenkbar oszillierend ausgeführt sein kann. Dies ist günstig sowohl im Hinblick auf die Zuverlässigkeit als auch im Hinblick auf einen vergleichsweise einfach aufgebauten Antrieb für die Bewegung des Saugkopfes. Ein vorteilhafter Effekt der rotierenden oder verschwenkbar-oszillierenden Bewegung des Saugkopfes ist die besonders günstige und zuverlässige Bereitstellung des erforderlichen Unterdrucks am Saugkopf, indem ein Saugschlauch über eine Drehkupplung an diesem angeschlossen ist.

Für die Bewegung des Saugkopfes relativ zum Laubsieb kommen im Rahmen der vorliegenden Erfindung verschiedene Antriebskonzepte in Betracht. Insbesondere kann hierfür ein gesonderter Motor (z.B. Elektromotor, Hydraulikmotor) vorgesehen sein. Auch kommt in Betracht, den Saugkopf über einen Nebenantrieb des das Sauggebläse antreibenden Motors anzutreiben. Weiterhin ist denkbar, den Abluftstrom über eine Turbine zu leiten, die - über ein geeignetes Reduktionsgetriebe - den Saugkopf treibend bewegt.

Eine andere bevorzugte Weiterbildung zeichnet sich dadurch aus, dass der Saugkopf als Saugbalken ausgeführt ist, insbesondere mit einem im Wesentlichen rechteckig oder trapezförmig langgestreckten Eintrittsquerschnitt des Saugkopfes im Bereich von dessen Mündung. Im Hinblick auf eine effiziente Reinigung des Laubsiebes mittels des Saugbalkens ist der Eintrittsquerschnitt des Saugkopfes im Bereich von dessen Mündung bevorzugt wesentlich kleiner als der durchströmte Querschnitt des Laubsiebes; er kann in diesem Sinne beispielsweise zwischen 4% und 20% des wirksamen Strömungsquerschnitts des zugeordneten Laubsiebes ausmachen. Die Dimensionierung im Einzelnen richtet sich dabei beispielsweise nach der Art und Weise, auf die eine das Leichtgut von dem Laubsieb absaugende Durchströmung des Saugkopfes bewirkt wird. Im Übrigen ist insoweit zu berücksichtigen, dass im Hinblick auf die bestimmungsgemäße Funktion des Saugkopfes, relativ großformatiges, leichtes Kehrgut von dem Laubsieb zu entfernen, eine zu geringe Querschnittsfläche am Mündungsquerschnitt des Saugkopfes ungünstig ist.

Hinsichtlich der Bereitstellung des erforderlichen Unterdrucks am Saugkopf - bezogen auf das allgemeine Druckniveau an der Zuströmseite des Laubsiebes - bestehen im Rahmen der vorliegenden Erfindung verschiedene Möglichkeiten. Denkbar ist beispielsweise, zu diesem Zweck ein gesondertes Sauggebläse vorzusehen. Eine insoweit besonders bevorzugte Weiterbildung der vorliegenden Erfindung zeichnet sich allerdings dadurch aus, dass der Saugkopf, unter Verzicht auf ein gesondertes Sauggebläse, über einen Saugschlauch an den Kehrgut-Ansaugtrakt stromaufwärts des Laubsiebes, insbesondere an den Saugkanal des Ansaugtrakts angeschlossen ist. Über den Saugkopf und den Saugschlauch erfolgt in diesem Falle eine Rezirkulation der zur Reinigung des Laubsiebes eingesetzten Luftströmung in den Kehrgut-Ansaugtrakt, so dass das vom Laubsieb entfernte Leichtgut nicht ins Freie gelangt, sondern vielmehr einer Abscheidung im Kehrgut-Sammelbehälter zugeführt werden kann. Bei Bedarf kommt insoweit in Betracht, das von dem Laubsieb entfernte Leichtgut einer gezielten Behandlung zu unterziehen, welche dessen Abscheidung im Kehrgut-Sammelbehälter begünstigt und einer erneuten Anlagerung am Laubsieb entgegenwirkt. Denkbar ist in diesem Zusammenhang beispielsweise eine Befeuchtung und/oder Zerkleinerung der trockenen Blätter, Folien und dergleichen. Weiterhin kommt in Betracht, das von dem Laubsieb abgesaugte Leichtgut aus dem Kreislauf auszuschleusen und einem gesonderten, spezifisch gestalteten Abscheidebehälter zuzuführen.

Im Hinblick auf eine besonders wirksame und zuverlässige regenerative Reinigung des Laubsiebes ist es besonders günstig, wenn bei der vorstehend erläuterten Weiterbildung der Erfindung der Saugschlauch an einen Saugkanal mit einem gegenüber dem Durchtrittsquerschnitt des Laubsiebes kleinen Strömungsquerschnitt angeschlossen ist; beispielsweise kann in diesem Sinne der Strömungsquerschnitt des Saugkanals im Bereich der Einmündung des Saugschlauches in diesem zwischen 8% und 30% des Durchtrittsquerschnitts des Laubsiebs betragen. Denn hierdurch lässt sich mit einfachsten Mitteln eine wirksame Druckdifferenz im Bereich des Saugkopfes gegenüber dem allgemeinen Druckniveau vor dem Laubsieb bereitstellen, die das Absaugen von zuströmseitig an dem Laubsieb angelagertem Leichtgut mittels des Saugkopfes begünstigt.

Im Hinblick auf eben diese Zielsetzung ist weiterhin besonders vorteilhaft, wenn dem Laubsieb abströmseitig eine relativ zu diesem bewegte, mit dem Saugkopf zusammenwirkende Abdeckung zugeordnet ist, welche insbesondere dem Saugkopf gegenüberstehen und mit diesem gekoppelt bewegt sein kann. Die Erstreckung der besagten Abdeckung parallel zum Laubsieb kann dabei insbesondere im Wesentlichen der Erstreckung des zugeordneten Saugkopfes entsprechen. Günstig ist indessen ein gewisser Überstand der Abdeckung gegenüber dem Mündungsquerschnitt des Saugkopfes. Die Abdeckung liegt dabei besonders bevorzugt nur in einem mittleren Bereich relativ dicht (abströmseitig) am Laubsieb an, während abgekantete Ränder schräg von dem Laubsieb abstehen; dies ergibt besonders günstige, die Reinigungsleistung positiv beeinflussende Strömungsverhältnisse in Form einer Rückströmung in Richtung auf den Saugkopf. Weiterhin kann das Entfernen von zuströmseitig an dem Laubsieb angelagertem Leichtgut unterstützt werden, indem der Saugkopf einen oder mehrere am Laubsieb anliegende(n) Abstreifer umfasst. Letztere können beispielsweise auch in Form von Abstreifbürsten ausgeführt sein. Es ist eine Steuerung der Bewegungsgeschwindigkeit des Saugkopfes relativ zum Laubsieb dergestalt denkbar, dass für das mechanische Entfernen von Leichtgut von dem Laubsieb mittels des mindestens einen Abstreifers eine höhere Geschwindigkeit gewählt wird als für das pneumatische Entfernen der verbleibenden Verschmutzungen mittels des Saugkopfes. Dies kann bis zu einer aktiven Nutzung insbesondere der Zentrifugalkraft beim mechanischen Reinigen des Laubsiebes mittels des mindestens einen gemeinsam mit dem zugeordneten Saugkopf relativ schnell rotierenden Abstreifers reichen.

Die vorliegende Erfindung eignet sich insbesondere für aufnehmende Kehrmaschinen, deren Kehrgut-Sammelbehälter eine einzige Abscheidekammer aufweist, wobei das Laubsieb in diesem Falle im Bereich des Saugluft-Austritts aus dem Kehrgut-Sammelbehälter angeordnet ist. Zwingend ist dies indessen nicht, vielmehr lässt sich die vorliegende Erfindung beispielsweise auch bei solchen Kehrmaschinen anwenden, bei denen das Laubsieb eine erste Abscheidekammer des Kehrgut-Sammelbehälters von einer stromabwärts hierzu angeordneten zweiten Abscheidekammer, die insbesondere der Abscheidung von Feinstaub dienen kann, trennt.

Gemäß einer abermals anderen bevorzugten Weiterbildung der Erfindung kann die Kehrmaschine schließlich mehrere strömungstechnisch parallel zueinander angeordnete Laubsiebe aufweisen, denen jeweils in erfindungsgemäßer Weise zuströmseitig ein relativ zu diesen bewegter Saugkopf zugeordnet ist, wobei in diesem Falle besonders bevorzugt die den beiden (oder mehr) Laubsieben zugeordneten Saugköpfe alternierend betrieben werden. Die Reinigung der verschiedenen Laubsiebe erfolgt in diesem Falle abwechselnd, was insbesondere von Vorteil ist im Hinblick auf die Effizienz der Laubsiebreinigung. Denn das zum wirksamen Entfernen von zuströmseitig an dem Laubsieb anhaftendem Leichtgut wirksame Druckgefälle im Bereich des zugeordneten Saugkopfes lässt sich auf diese Weise maximieren.

Nur der Vollständigkeit halber wird darauf hingewiesen, dass als selbstfahrende Kehrmaschinen im Sinne der vorliegenden Erfindung auch solche in Gespannform zu verstehen sind, bei der das Trägerfahrzeug ein Zugfahrzeug bildet, welches einen Anhänger zieht, auf dem die Kehreinheit und die Kehrgut-Aufnahmeeinheit aufgebaut sind.

Weiterhin ist darauf hinzuweisen, dass für die konstruktive bzw. technische Ausführung des "Laubsiebs" ein erheblicher Gestaltungsspielraum besteht. Insbesondere kommen als Grob- bzw. Leichtgutabscheider starre Filterplatten (insbesondere aus Metall oder Kunststoff) ebenso in Betracht wie flexible Filtertücher (aus Textil- bzw. Gewebematerial). Erkennbar lassen sich im Übrigen die vorstehend dargelegten Erkenntnisse in entsprechender Weise auf solche an einer aufnehmenden Kehrmaschine vorhandenen Filtereinrichtungen anwenden, die dem Abscheiden nicht (nur) vom Leichtgut aus dem Luftstrom dienen, sondern dem Abscheiden anderer Fraktionen bzw. Partikel. Insbesondere lassen sich mit vergleichbaren Vorteilen in entsprechender Weise auch Mittelgut- und Feingutfilter kontinuierlich reinigen bzw. regenerieren, bis hin zu Feinstgutfiltern z.B. aus Papier oder in Form einer Membran.

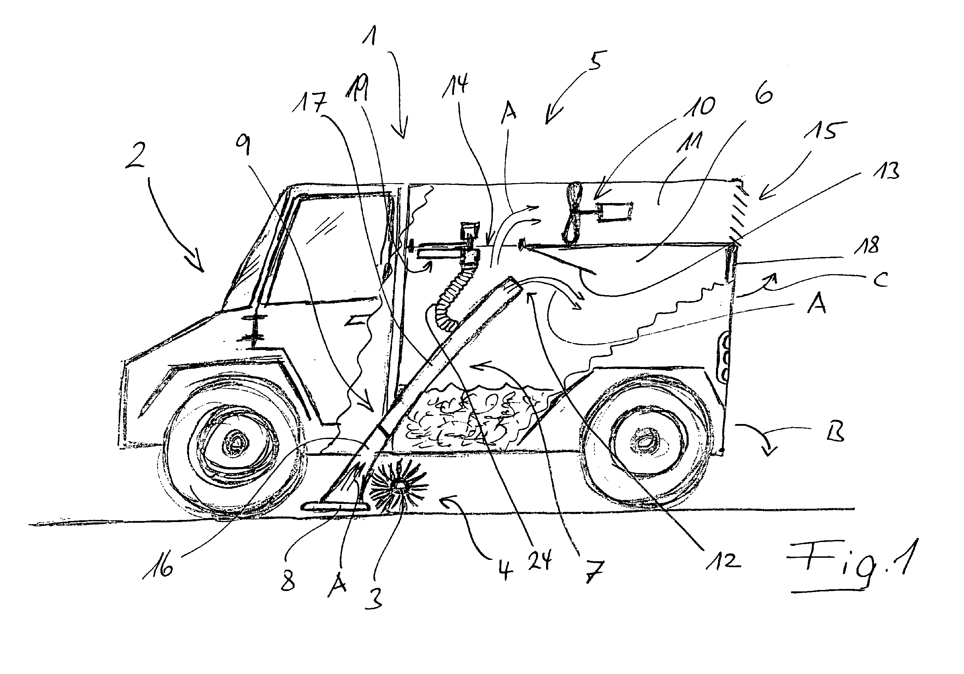

Im Folgenden wird die vorliegende Erfindung anhand eines in der Zeichnung veranschaulichten bevorzugten Ausführungsbeispiels näher erläutert. Dabei zeigt
- Fig. 1: in teilweise schematischer Ansicht die vorliegend relevanten Komponenten einer als Kompaktkehrmaschine ausgeführten Kehrmaschine nach der vorliegenden Erfindung,

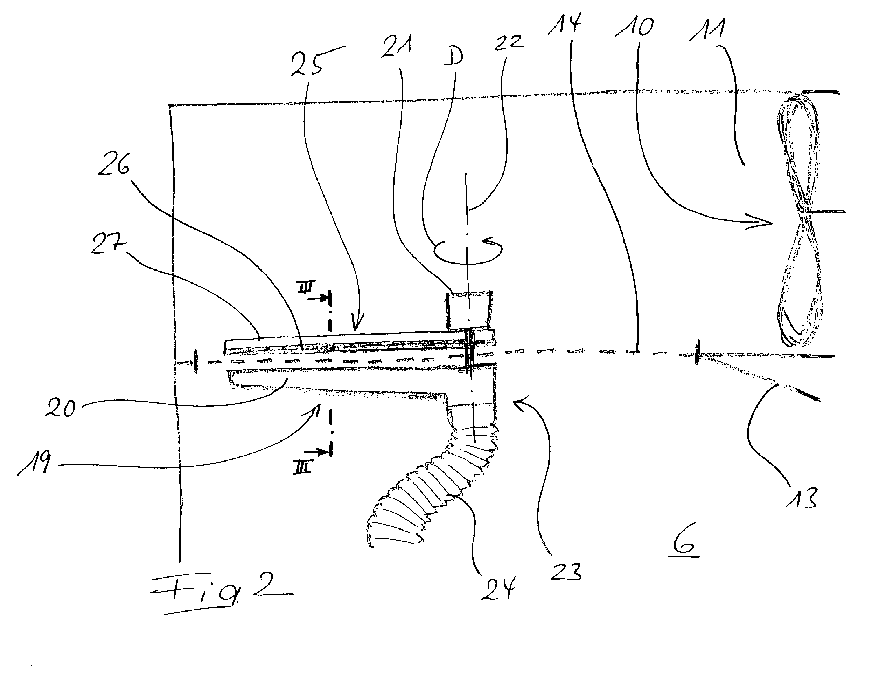

- Fig. 2: einen vergrößerten Ausschnitt der Fig. 1 und

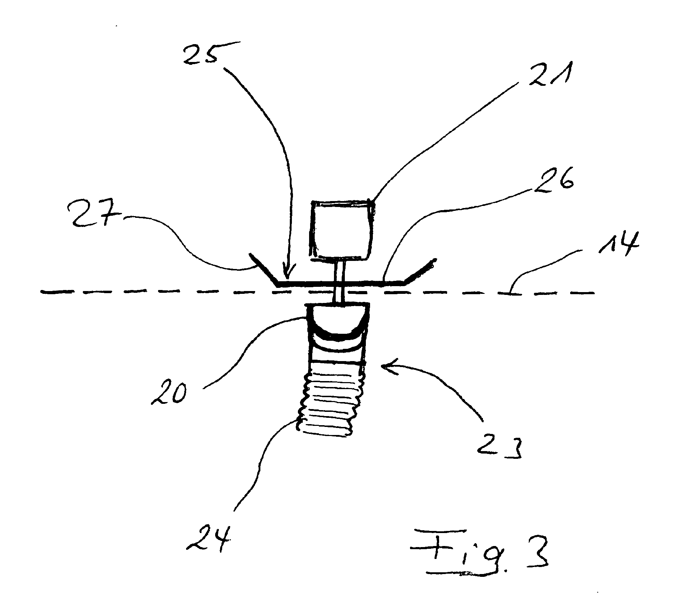

- Fig. 3: einen Querschnitt durch die Anordnung der Fig. 1 und 2 entlang der Linie III-III in Fig. 2.

Die in der Zeichnung veranschaulichte selbstfahrende aufnehmende Kehrmaschine 1 umfasst in als solches bekannter und daher an dieser Stelle nicht vertieft erläuterter Weise ein Trägerfahrzeug 2, eine mit einem rotierend angetriebenen Besen 3 ausgeführte Kehreinheit 4 und einer Kehrgut-Aufnahmeeinheit 5. Letztere umfasst wiederum einen Kehrgut-Sammelbehälter 6, in welchen ein Kehrgut-Ansaugtrakt 7 mit einem Saugmund 8 und einem Saugkanal 9 mündet, und ein Sauggebläse 10. Das in einem Abluftkanal 11 angeordnete Sauggebläse 10 bewirkt eine Luftströmung A durch den Saugmund 8, den Saugkanal 9 und den Kehrgut-Sammelbehälter 6 hindurch, wobei gegenüber der Mündung 12 des Saugkanals 9 in dem Kehrgut-Sammelbehälter 6 eine Prallplatte 13 und im Bereich des Anschlusses des Abluftkanals 11 an den Kehrgut-Sammelbehälter 6 ein Laubsieb 14 angeordnet ist und die Abluft den Abluftkanal 11 durch einen Austritt 15 verlässt.

Im Hinblick auf die Möglichkeit, die Abscheidekammer des Kehrgut-Sammelbehälters 6 durch dessen Abkippen (Pfeil B) zu entleeren, ist der Saugkanal 9 zweiteilig ausgeführt mit einem unteren Abschnitt 16 und einem fest mit dem Kehrgut-Sammelbehälter 6 verbundenen oberen Abschnitt 17, wobei weiterhin der Kehrgut-Sammelbehälter 6 an seinem rückwärtigen Ende von einer nach oben verschwenkbaren (Pfeil C) Klappe 18 verschlossen ist.

Dem starren, d.h. relativ zum Kehrgut-Sammelbehälter 6 nicht beweglichen Laubsieb 14 ist zuströmseitig ein Saugkopf 19 zugeordnet. Dieser ist als Saugbalken 20 ausgeführt, dessen Mündung dem Laubsieb 14 mit geringem Abstand gegenübersteht und der relativ zu dem Laubsieb 14 bewegbar ist, indem er mittels des Antriebsmotors 21 um die auf dem Laubsieb 14 senkrecht stehende Achse 22 drehbar ist (Pfeil D). Der Saugbalken 20 ist über eine Drehkupplung 23 und einen Saugschlauch 24 an den Saugkanal 9 - nämlich dessen oberen Abschnitt 17 - angeschlossen, wobei - im Interesse der Möglichkeit einer intermittierenden Reinigung des Laubsiebes 14 mittels des Saugkopfes 19 - in die Drehkupplung 23 bei Bedarf eine steuerbare Absperrung integriert sein kann.

Dem Laubsieb 14 ist abströmseitig eine relativ zu diesem bewegte, dem Saugkopf 19 gegenüberstehende, mit diesem gekoppelte und gemeinsam mit diesem um die Achse 22 rotierende Abdeckung 25 zugeordnet, welche dergestalt mit dem Saugkopf 19 zusammenwirkt, dass sie eine Rückströmung durch das Laubsieb 14 hindurch im Bereich des Saugkopfes gezielt beeinflusst und auf diese Weise den am Saugkopf anliegenden Unterdruck für das Absammeln von zuströmseitig an dem Laubsieb 14 anhaftenden Leichtgut konzentriert. Die Abdeckung 25 ist - in Bewegungsrichtung von Saugkopf 20 und Abdeckung 25 - breiter als der Saugkopf. Er umfasst einen relativ dicht an dem Laubsieb 14 anliegenden mittleren Abschnitt 26 und zwei abgekantete, schräg sich von dem Laubsieb entfernende Randberreiche 27. Das Entfernen von Leichtgut von dem Laubsieb mittels des Saugkopfes wird durch einen - zeichnerisch nicht dargestellten - Abstreifer unterstützt, der an dem Saugkopf angeordnet ist und zuströmseitig an dem Laubsieb 14 anliegt.

Weist die Kehrmaschine im Sinne einer Abwandlung der Zeichnung mehrere strömungstechnisch parallel geschaltete Laubsiebe 14 auf, so werden die jeweils zugeordneten Saugköpfe 19 bevorzugt abwechselnd betrieben, zu welchem Zweck entsprechende Absperrungen vorgesehen sind, mittels derer die Saugköpfe abwechselnd durch Verbindung mit dem Saugkanal 9 mit Unterdruck beaufschlagbar sind.

## Patentansprüche

1. Selbstfahrende aufnehmende Kehrmaschine (1) mit einem Trägerfahrzeug (2), einer Kehreinheit (4) und einer Kehrgut-Aufnahmeeinheit (5), welche einen Kehrgut-Ansaugtrakt (7) mit einem Saugmund (8) und einem Saugkanal (9), einen Kehrgut-Sammelbehälter (6) und ein Sauggebläse (10) umfasst, wobei die Kehrgut-Aufnahmeeinheit ein durchströmtes, der Abscheidung von leichtem Grobgut dienendes Laubsieb (14) aufweist, **dadurch gekennzeichnet, dass** dem Laubsieb (14) zuströmseitig ein relativ zu diesem bewegter Saugkopf (19) zugeordnet ist.

2. Kehrmaschine nach Anspruch 1, **dadurch gekennzeichnet, dass** der Saugkopf (19) oszillierend bewegt angetrieben ist.

3. Kehrmaschine nach Anspruch 1, **dadurch gekennzeichnet, dass** der Saugkopf (19) rotierend bewegt angetrieben ist.

4. Kehrmaschine nach einem der Ansprüche 1 bis 3, **dadurch gekennzeichnet, dass** der Saugkopf (19) als Saugbalken (20) ausgeführt ist.

5. Kehrmaschine nach einem der Ansprüche 1 bis 4, **dadurch gekennzeichnet, dass** der Saugkopf (19) über einen Saugschlauch (24) an den Kehrgut-Ansaugtrakt (7) stromaufwärts des Laubsiebes (14) angeschlossen ist.

6. Kehrmaschine nach Anspruch 5, **dadurch gekennzeichnet, dass** der Saugkopf (19) über den Saugschlauch (24) an einen Saugkanal (9) mit einem gegenüber dem Durchtrittsquerschnitt des Laubsiebes (14) kleinem Strömungsquerschnitt angeschlossen ist.

7. Kehrmaschine nach einem der Ansprüche 1 bis 6, **dadurch gekennzeichnet, dass** dem Laubsieb (14) abströmseitig eine relativ zu diesem bewegte, mit dem Saugkopf (19) zusammenwirkende Abdeckung (25) zugeordnet ist.

8. Kehrmaschine nach Anspruch 7, **dadurch gekennzeichnet, dass** die Abdeckung (25) dem Saugkopf (19) gegenübersteht und mit diesem gekoppelt bewegt ist.

9. Kehrmaschine nach Anspruch 7 oder Anspruch 8, **dadurch gekennzeichnet, dass** die Erstreckung der Abdeckung (25) parallel zum Laubsieb (14) im Wesentlichen der Erstreckung des zugeordneten Saugkopfes (19) entspricht.

10. Kehrmaschine nach einem der Ansprüche 1 bis 9, **dadurch gekennzeichnet, dass** das Laubsieb (14) eine erste Abscheidekammer des Kehrgut-Sammelbehälters (6) von einer stromabwärts hierzu angeordneten zweiten Abscheidekammer trennt.

11. Kehrmaschine nach einem der Ansprüche 1 bis 10, **dadurch gekennzeichnet, dass** der Kehrgut-Sammelbehälter (6) eine einzige Abscheidekammer aufweist, wobei das Laubsieb (14) im Bereich des Saugluft-Austritts des Kehrgut-Sammelbehälters angeordnet ist.

12. Kehrmaschine nach einem der Ansprüche 1 bis 11, **dadurch gekennzeichnet, dass** der Saugkopf (19) einen am Laubsieb (14) anliegenden Abstreifer umfasst.

13. Kehrmaschine nach einem der Ansprüche 1 bis 12, **dadurch gekennzeichnet, dass** sie mehrere strömungstechnisch parallel zueinander angeordnete Laubsiebe (14) aufweist, wobei die den Laubsieben zugeordneten Saugköpfe (19) alternierend betrieben werden.
